# DEMANDE DE BREVET EUROPEEN

(11) **EP 2 444 705 A1**
(43) Date de publication de la demande: **25.04.2012**
(21) Numéro de dépôt: 11183666.4
(22) Date de dépôt: 03.10.2011
(51) Int. Cl.: F16L 21/08, F16L 47/12

(54) **Raccord femelle, du type interposable entre un element tubulaire a raccorder, tel qu'un conduit, et un embout male**

(30) Priorité: 19.10.2010 FR 1058510
(71) Demandeur: Tristone Flowtech Solutions (TFS), 44470 Carquefou (FR)
(72) Inventeur: Le Mouellic, Bruno, 44470 Carquefou (FR)
(74) Mandataire: Godineau, Valérie

(57) **Abrégé**

L'invention concerne un raccord femelle (1), du type interposable entre un élément (2) tubulaire à raccorder, tel qu'un conduit, et un embout (3) mâle, ledit raccord (1) femelle se présentant sous forme d'un corps tubulaire dont l'extrémité (4) raccordable à l'embout (3) mâle est munie de doigts (5) dits axiaux, aptes à s'écarter au passage d'insertion de l'embout (3) mâle et à venir se resserrer autour de ce dernier.

Il est caractérisé en ce que les doigts (5) du raccord (1) femelle sont reliés entre eux par un matériau élastiquement déformable de comblement de l'espace interdigital, ce matériau élastiquement déformable s'étendant en outre à l'intérieur dudit corps tubulaire à revêtement au moins partiel de l'intérieur du corps tubulaire du raccord (1) femelle en délimitant une bande (7) périphérique interne à fonction d'étanchéité.

## Description

La présente invention concerne un raccord femelle, du type interposable entre un élément tubulaire à raccorder, tel qu'un conduit, et un embout mâle.

Elle concerne plus particulièrement un raccord femelle se présentant sous forme d'un corps tubulaire dont l'extrémité raccordable à l'embout mâle est munie de doigts dits axiaux, aptes à s'écarter au passage d'insertion de l'embout mâle et à venir se resserrer autour de ce dernier.

De tels raccords ou embouts femelles sont bien connus à ceux versés dans cet art.

Jusqu'à présent, ces raccords sont réalisés, soit en un matériau rigide et une garniture d'étanchéité par exemple sous forme d'un joint torique ou autre, est rapportée à l'intérieur dudit raccord, soit en un matériau souple élastiquement déformable.

La première solution est complexe à mettre en oeuvre puisqu'elle nécessite une opération de montage de la garniture d'étanchéité à l'intérieur du corps tubulaire du raccord, et elle donne parfois des résultats insatisfaisants en matière d'étanchéité en particulier dans le cas d'un raccord de conduit de circulation de fluide sous pression. Cette solution est notamment décrite dans le document US 2009/0230675 où le dispositif de liaison comporte donc un embout mâle, un raccord femelle et une garniture d'étanchéité rapportée. La présence de trois pièces nécessite notamment de prévoir des moyens de blocage de la rotation entre raccord femelle et garniture d'étanchéité.

La deuxième solution nécessite un effort de montage important lors de l'emmanchement sur l'embout mâle.

Un but de la présente invention est donc de proposer un raccord femelle, du type précité, dont la conception permet une fixation sur l'embout mâle avec un effort de montage réduit sans nuire à la simplification de la fabrication et aux propriétés d'étanchéité dudit raccord.

Un autre but de la présente invention est de proposer un raccord femelle dont la conception permet de réduire le nombre de pièces nécessaires à la réalisation du dispositif de liaison intégrant un tel raccord.

A cet effet, l'invention a pour objet un raccord femelle, du type interposable entre un élément tubulaire à raccorder, tel qu'un conduit, et un embout mâle, ledit raccord femelle se présentant sous forme d'un corps tubulaire dont l'extrémité raccordable à l'embout mâle est munie de doigts dits axiaux, aptes à s'écarter au passage d'insertion de l'embout mâle et à venir se resserrer autour de ce dernier, caractérisé en ce que les doigts du raccord femelle sont reliés entre eux par un matériau élastiquement déformable de comblement au moins partiel de l'espace interdigital, ce matériau élastiquement déformable s'étendant en outre à l'intérieur dudit corps tubulaire à revêtement au moins partiel de l'intérieur du corps tubulaire du raccord femelle en délimitant une bande périphérique interne, doigts et matériau élastiquement déformable formant un ensemble d'un seul tenant.

Le corps tubulaire du raccord est donc muni d'un matériau élastiquement déformable qui, d'une part, forme, dans la zone interdigitale dudit corps tubulaire, un voile et, d'autre part, à l'intérieur du corps tubulaire, une bande périphérique interne à fonction de garniture d'étanchéité.

Corps tubulaire et voile formant un ensemble d'un seul tenant, c'est-à-dire un ensemble monobloc ou d'une seule pièce.

Grâce au fait que les doigts du raccord femelle sont reliés entre eux par ce voile en un matériau élastiquement déformable à la manière de doigts palmés et que ce voile se prolonge à l'intérieur du corps tubulaire du raccord pour former un revêtement partiel à l'intérieur du corps tubulaire en délimitant une bande périphérique interne, il en résulte un raccord dont les caractéristiques d'étanchéité sont satisfaisantes et dont l'effort de montage est réduit du fait que les doigts du corps tubulaire réalisés en un matériau plus rigide que la matière élastiquement déformable reliant les doigts entre eux peuvent, dans certaines configurations, venir en contact avec ledit embout mâle lors de la liaison par emmanchement desdits raccords mâle et femelle entre eux. Un tel raccord permet de s'affranchir d'une garniture d'étanchéité rapportée et il en résulte donc un nombre réduit de pièces.

Généralement, la bande périphérique interne en matériau élastiquement déformable est écartée de l'extrémité libre des doigts.

Dans ce mode de réalisation, l'extrémité libre des doigts est dépourvue de matériau élastiquement déformable de sorte que l'effort de montage est réduit car le coefficient de friction de la matière constitutive des doigts est inférieur au coefficient de friction du matériau élastiquement déformable.

Pour faciliter le montage, au moins l'une, de préférence, chaque zone interdigitale réalisée par ledit matériau élastiquement déformable est munie d'au moins un soufflet apte à élargir l'espace entre deux doigts.

Les doigts sont munis, sur leur face interne, à ou au voisinage de leur extrémité libre, d'un guide d'entrée et d'un renflement en surépaisseur apte à former une surface de contact avec l'embout mâle.

Généralement, le raccord femelle est, côté extrémité de raccordement à l'élément tubulaire, muni d'une lèvre périphérique, doublant intérieurement la paroi du corps tubulaire du raccord constitutive des doigts du raccord femelle, dans la zone de recouvrement de ladite paroi par le matériau élastiquement déformable de revêtement partiel de l'intérieur du raccord femelle, lèvre et paroi, de préférence réalisées d'une seule pièce, délimitant entre elles une cavité annulaire périphérique, ouverte en direction de l'extrémité du raccord femelle raccordable à l'élément tubulaire et à l'intérieur de laquelle s'insère au moins partiellement le matériau élastiquement déformable de revêtement partiel de l'intérieur du raccord femelle.

Cette conception permet d'améliorer l'étanchéité de l'ensemble. Le corps tubulaire est en un matériau présentant une dureté supérieure à la dureté du matériau élastiquement déformable de comblement au moins partiel de l'espace interdigital dudit corps.

De préférence, le matériau élastiquement déformable de comblement au moins partiel de l'espace interdigital et de revêtement partiel de l'intérieur du corps tubulaire du raccord femelle est un élastomère thermoplastique. Le corps tubulaire est en un matériau rigide tel qu'un polyamide, un polyester élastomère, un polypropylène copolymère.

Comme mentionné ci-dessus, le voile formé par le matériau élastiquement déformable dans la zone interdigitale du corps tubulaire confère auxdits doigts du raccord l'apparence de doigts palmés.

L'invention sera bien comprise à la lecture de la description suivante d'exemples de réalisation, en référence aux dessins annexés dans lesquels :

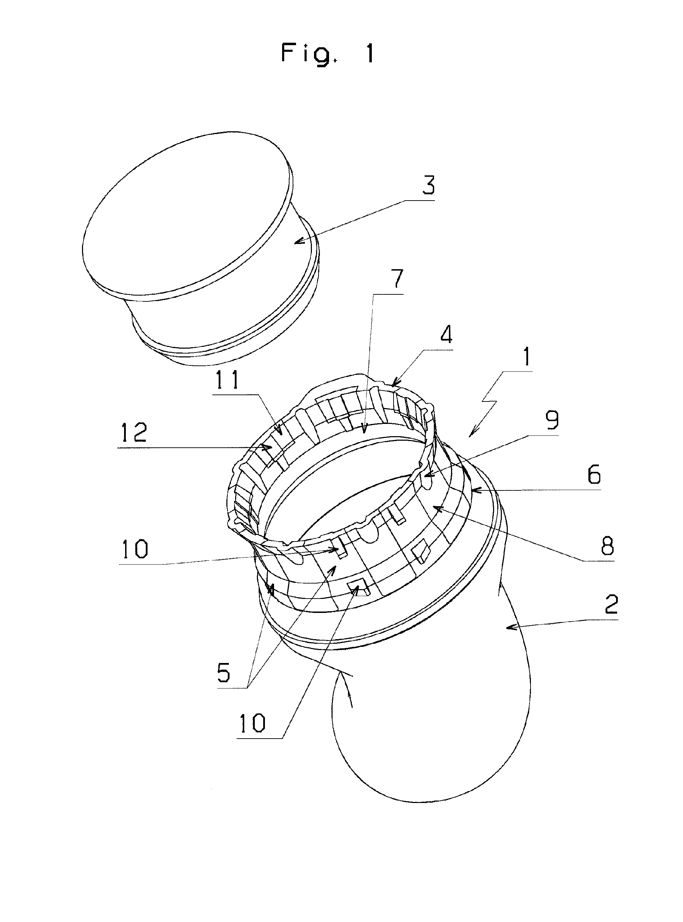

La figure 1 représente une vue en perspective d'un raccord femelle prêt à être raccordé à un embout mâle ;

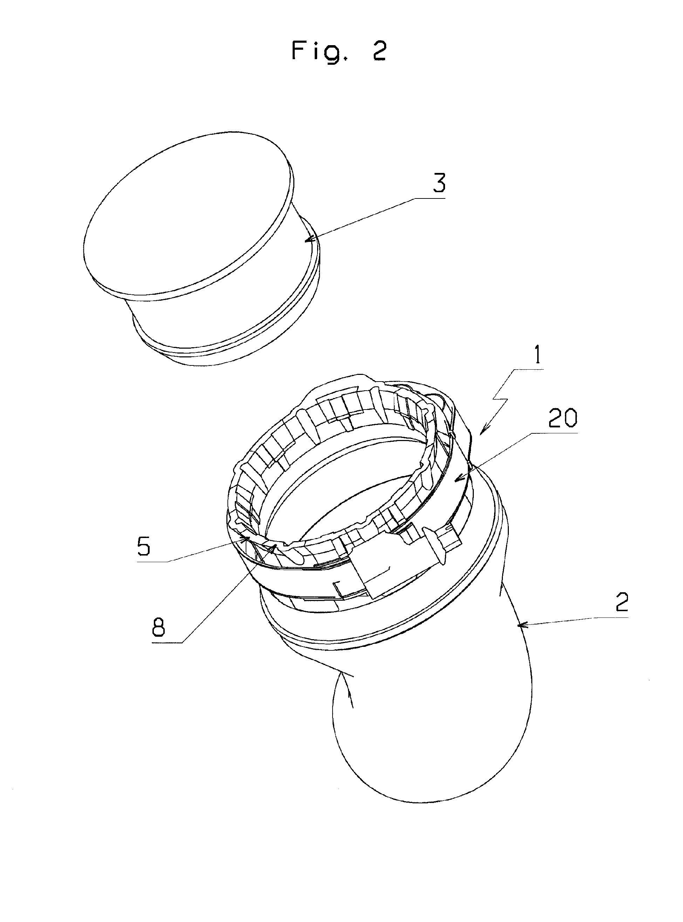

La figure 2 représente une vue en perspective d'un raccord femelle prêt à être raccordé à un embout mâle, à l'état posé d'un collier de serrage autour dudit raccord femelle ;
La figure 3 représente une vue en perspective du corps tubulaire du raccord femelle avant application du matériau élastiquement déformable ;

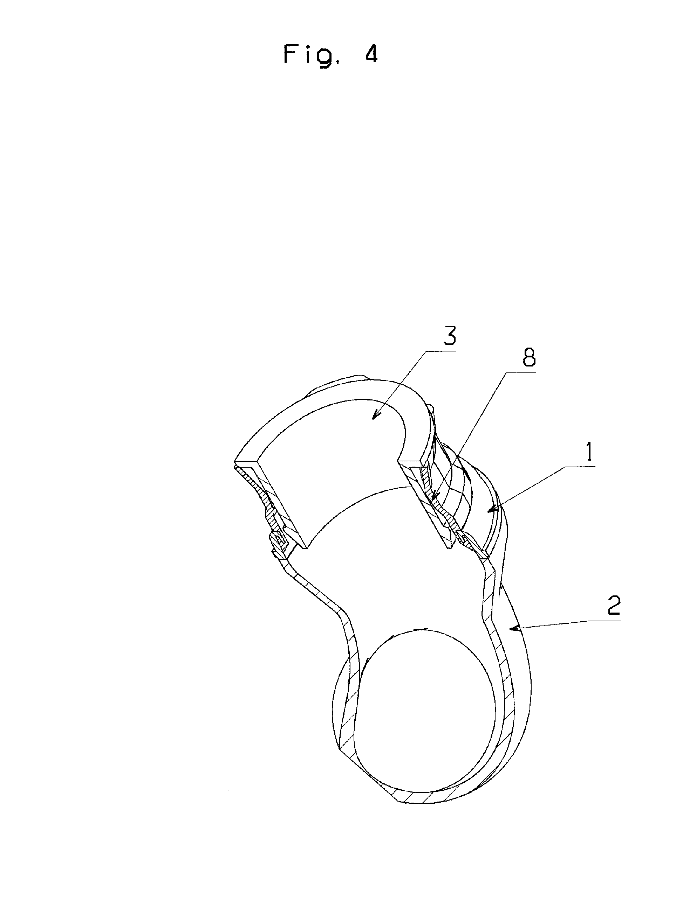

La figure 4 représente une vue partielle en arraché d'un raccord femelle, prise au niveau de la zone interdigitale ;

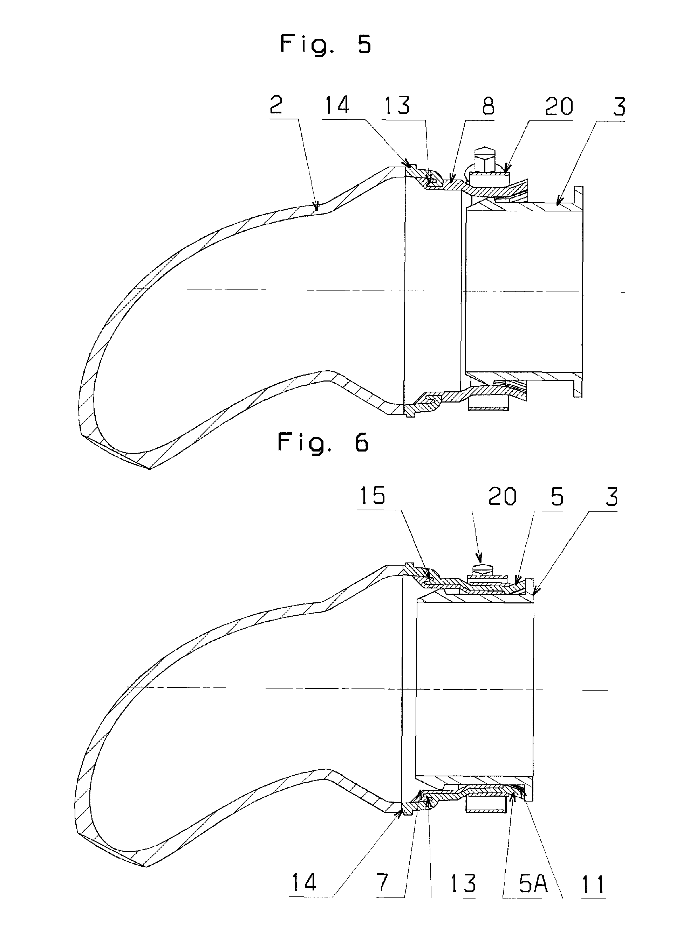

La figure 5 représente une vue en coupe d'un raccord femelle à l'état raccordé à un embout mâle et à l'état posé du collier de serrage, ladite coupe étant prise au niveau de la zone interdigitale ;
La figure 6 représente une vue en coupe d'un raccord femelle à l'état raccordé à un embout mâle et à l'état posé du collier de serrage, ladite coupe étant prise au niveau des doigts.

Comme mentionné ci-dessus, le raccord femelle 1, objet de l'invention, est du type interposable entre un élément 2 tubulaire à raccorder, tel qu'un conduit, et un embout 3 mâle.

Ce raccord ou embout femelle 1 peut être réalisé d'une seule pièce ou fixé, par exemple par soudure, à l'élément 2 tubulaire à raccorder. Ce corps tubulaire est généralement réalisé en un matériau rigide, tel qu'un polyamide, un polyester élastomère, un polypropylène copolymère.

L'élément 2 tubulaire à raccorder peut être, par exemple, un conduit d'un circuit d'admission en air ou d'alimentation d'un moteur suralimenté d'un véhicule. L'embout 3 mâle est, quant à lui, muni d'un bourrelet circonférentiel externe.

A l'état inséré de l'embout mâle dans le raccord femelle, le raccord femelle est fixé à l'embout mâle par un collier 20 de serrage qui entoure le raccord femelle.

Le raccord 1 femelle se présente sous forme d'un corps tubulaire dont l'extrémité 4, raccordable à l'embout 3 mâle, est munie de doigts 5 ou languettes, dits axiaux, aptes à s'écarter au passage d'insertion, c'est-à-dire d'introduction de l'embout 3 mâle dans le raccord femelle, et à venir se resserrer autour de ce dernier, en particulier derrière le bourrelet de l'embout mâle.

De manière caractéristique à l'invention, ces doigts 5 du raccord femelle sont reliés entre eux par un matériau élastiquement déformable de comblement au moins partiel de l'espace interdigital pour former un voile entre lesdits doigts à la manière de doigts palmés. Doigts et matériau élastiquement déformable forment ainsi un ensemble monobloc ou d'une seule pièce.

Ce matériau élastiquement déformable s'étend, en outre, à l'intérieur dudit corps tubulaire et vient à recouvrement au moins partiel de l'intérieur dudit raccord en délimitant une bande 7 périphérique interne à l'intérieur dudit corps tubulaire. Cette bande 7 périphérique interne entoure l'embout mâle à l'état inséré de l'embout mâle dans le raccord femelle.

De préférence, cette bande 7 périphérique interne est écartée de l'extrémité libre des doigts. Ainsi, la bande peut être écartée de l'extrémité libre du doigt d'une distance égale à environ un tiers de la longueur du doigt. Cette bande 7 périphérique interne se prolonge donc le long de l'un de ses bords longitudinaux par des excroissances ou parties en saillie qui forment la zone interdigitale et viennent éventuellement à recouvrement de la base des doigts.

Généralement, le matériau de comblement de l'espace interdigital et de revêtement partiel de l'intérieur du corps tubulaire du raccord femelle est un élastomère thermoplastique.

De préférence, le matériau élastiquement déformable de comblement de l'espace interdigital et de revêtement partiel de l'intérieur du corps tubulaire du raccord femelle est surmoulé sur ledit corps tubulaire.

La liaison entre matériau élastiquement déformable et corps tubulaire est obtenue soit par pression à chaud du matériau élastiquement déformable contre le corps tubulaire lors du surmoulage, le matériau élastiquement déformable et la matière du corps tubulaire étant compatibles, soit par collage. Dans ce second cas, un adhésif est injecté après injection de la matière constitutive du corps tubulaire dans les zones de liaison du corps tubulaire et du matériau élastiquement déformable. La liaison entre matériau élastiquement déformable et corps tubulaire est donc obtenue après traitement chimique des surfaces de liaison.

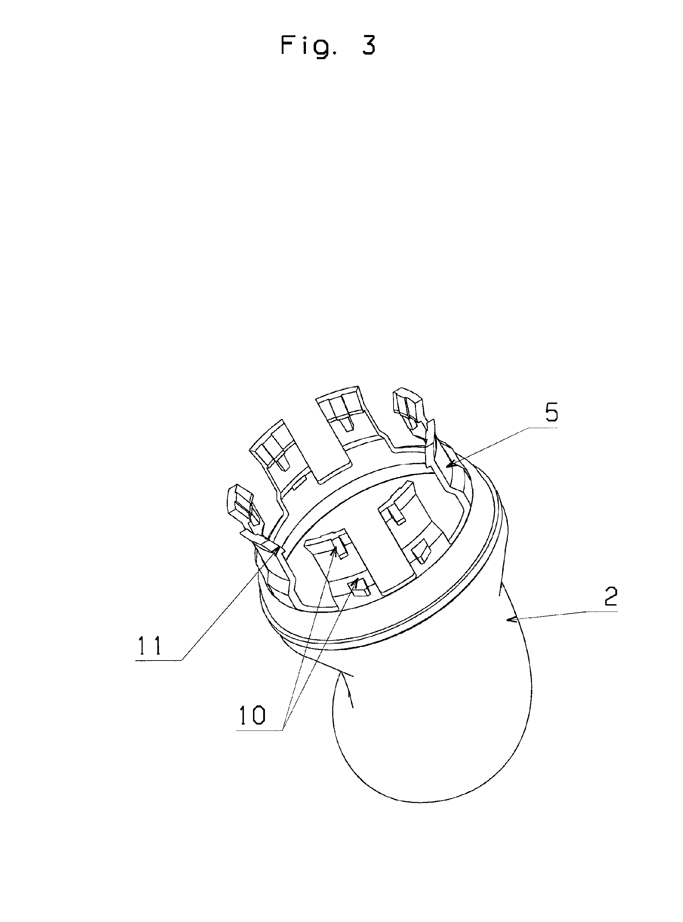

Le corps tubulaire se présente donc, avant surmoulage, conformément à la figure 3 où l'espace entre doigts est vide avant d'être occupé par le matériau élastiquement déformable.

Dans les exemples représentés, le raccord 1 femelle est, côté extrémité 6 de raccordement à l'élément 2 tubulaire, muni d'une lèvre 13 périphérique doublant intérieurement la paroi du corps tubulaire du raccord qui porte les doigts 5 du raccord 11 femelle dans la zone de recouvrement de ladite paroi 14 par le matériau élastiquement déformable de revêtement partiel de l'intérieur du raccord 11 femelle. Lèvre 13 et paroi 14, de préférence réalisées d'une seule pièce, délimitent entre elles une cavité 15 annulaire périphérique, ouverte en direction de l'extrémité 6 du raccord 1 femelle raccordable à l'élément 2 tubulaire, et à l'intérieur de laquelle s'insère au moins partiellement le matériau élastiquement déformable de revêtement partiel de l'intérieur du raccord 1 femelle.

A l'état inséré dans la cavité, le matériau élastiquement déformable forme un chanfrein en entrée de ladite cavité tendant à faciliter un placage de la lèvre contre la paroi du corps tubulaire pour accroître les propriétés d'étanchéité.

Pour réduire encore l'effort de montage, au moins l'une de préférence chaque zone 8 interdigitale réalisée par ledit matériau élastiquement déformable est munie d'au moins un soufflet 9 apte à permettre d'élargir l'espace entre deux doigts.

De préférence, au moins l'un des soufflets 9 est formé par une cannelure axiale ménagée côté face interne de la zone 8 interdigitale, ladite cannelure présentant, de préférence, une section décroissante depuis l'extrémité 4 du raccord 1 femelle raccordable à l'embout 3 mâle en direction de l'extrémité 6 opposée.

Ainsi, dans les exemples représentés, chaque soufflet est formé d'une cannelure axiale.

Pour faciliter, la pose de l'organe 20 de serrage, au moins l'un des doigts 5 est muni, sur sa face externe, de butées 10 décalées axialement le long du raccord 1 femelle, lesdites butées 10 délimitant entre elles un intervalle à l'intérieur duquel est positionnable ledit organe 20 de serrage, tel qu'un collier.

Dans les exemples représentés, chaque doigt est équipé de deux butées 10. Les doigts 5 sont munis, sur leur face interne, à ou au voisinage de leur extrémité 5A libre, d'un guide 11 d'entrée et d'un renflement 12 en surépaisseur apte à former une surface de contact avec l'embout 3 mâle.

Le guide d'entrée est formé par une inclinaison de l'extrémité libre du doigt vers l'extérieur du corps tubulaire pour former une ouverture du corps tubulaire qui s'évase en direction de l'extérieur. Guide d'entrée et renflement participent également à la réduction de l'effort de montage nécessaire à l'insertion de l'embout mâle dans le raccord femelle.

Dans les exemples représentés, lesdits renflements 12 se présentent chacun sous forme d'une nervure axiale.

Le raccordement du raccord femelle et d'un embout mâle s'opère de manière similaire au raccordement d'éléments de raccord traditionnels. L'embout mâle est introduit dans le raccord femelle, les doigts du raccord femelle s'écartent avant de venir se resserrer au niveau de leur extrémité libre derrière le bourrelet équipant l'embout mâle.

L'effort de montage est réduit comparativement aux propriétés d'étanchéité obtenues. Il est ainsi possible d'utiliser un tel dispositif de raccordement dans le cas de raccordement d'éléments tubulaires à l'intérieur desquels circulent des fluides sous haute pression.

## Revendications

1. Raccord femelle (1), du type interposable entre un élément (2) tubulaire à raccorder, tel qu'un conduit, et un embout (3) mâle, ledit raccord (1) femelle se présentant sous forme d'un corps tubulaire dont l'extrémité (4) raccordable à l'embout (3) mâle est munie de doigts (5) dits axiaux, aptes à s'écarter au passage d'insertion de l'embout (3) mâle et à venir se resserrer autour de ce dernier, **caractérisé en ce que** les doigts (5) du raccord (1) femelle sont reliés entre eux par un matériau élastiquement déformable de comblement au moins partiel de l'espace interdigital, ce matériau élastiquement déformable s'étendant en outre à l'intérieur dudit corps tubulaire, à revêtement au moins partiel de l'intérieur du corps tubulaire du raccord (1) femelle, en délimitant une bande (7) périphérique interne, doigts et matériau élastiquement déformable formant un ensemble d'un seul tenant.

2. Raccord femelle (1) selon la revendication 1,
**caractérisé en ce que** la bande (7) périphérique interne en matériau élastiquement déformable est écartée de l'extrémité (5A) libre des doigts (5).

3. Raccord femelle (1) selon l'une des revendications 1 ou 2,
**caractérisé en ce qu'**au moins l'une, de préférence chaque, zone (8) interdigitale réalisée par ledit matériau élastiquement déformable est munie d'au moins un soufflet (9) apte à élargir l'espace entre deux doigts.

4. Raccord femelle (1) selon la revendication 3,
**caractérisé en ce qu'**au moins l'un des soufflets (9) est formé par une cannelure axiale ménagée côté face interne de la zone (8) interdigitale, ladite cannelure présentant, de préférence, une section décroissante depuis l'extrémité (4) du raccord (1) femelle raccordable à l'embout (3) mâle en direction de l'extrémité (6) opposée.

5. Raccord femelle (1) selon l'une des revendications 1 à 4,
**caractérisé en ce qu'**au moins l'un des doigts (5) est muni, sur sa face externe, de butées (10) décalées axialement le long du raccord (1) femelle, lesdites butées (10) délimitant entre elles un intervalle à l'intérieur duquel est positionnable un organe (20) de serrage, tel qu'un collier.

6. Raccord femelle (1) selon l'une des revendications 1 à 5,
**caractérisé en ce que** les doigts (5) sont munis, sur leur face interne, à ou au voisinage de leur extrémité (5A) libre, d'un guide (11) d'entrée et d'un renflement (12) en surépaisseur apte à former une surface de contact avec l'embout (3) mâle.

7. Raccord femelle (1) selon la revendication 6,
**caractérisé en ce que** lesdits renflements (12) se présentent chacun sous forme d'une nervure axiale.

8. Raccord femelle (1) selon l'une des revendications 1 à 7,
**caractérisé en ce que** le raccord (1) femelle est, côté extrémité (6) de raccordement à l'élément (2) tubulaire, muni d'une lèvre (13) périphérique, doublant intérieurement la paroi du corps tubulaire du raccord constitutive des doigts (5) du raccord (11) femelle, dans la zone de recouvrement de ladite paroi (14) par le matériau élastiquement déformable de revêtement partiel de l'intérieur du raccord (11) femelle, lèvre (13) et paroi (14), de préférence réalisées d'une seule pièce, délimitant entre elles une cavité (15) annulaire périphérique, ouverte en direction de l'extrémité (6) du raccord (1) femelle raccordable à l'élément (2) tubulaire, et à l'intérieur de laquelle s'insère au moins partiellement le matériau élastiquement déformable de revêtement partiel de l'intérieur du raccord (1) femelle.

9. Raccord femelle (1) selon l'une des revendications 1 à 8,
**caractérisé en ce que** le matériau élastiquement déformable de comblement au moins partiel de l'espace interdigital et de revêtement partiel de l'intérieur du corps tubulaire du raccord (1) femelle est surmoulé sur ledit corps tubulaire.

10. Raccord femelle (1) selon l'une des revendications 1 à 9,
**caractérisé en ce que** le matériau élastiquement déformable de comblement au moins partiel de l'espace interdigital et de revêtement partiel de l'intérieur du corps tubulaire du raccord (1) femelle est un élastomère thermoplastique.

11. Raccord femelle (1) selon l'une des revendications 1 à 10,
**caractérisé en ce que** le corps tubulaire est en un matériau présentant une dureté supérieure à la dureté du matériau élastiquement déformable de comblement au moins partiel de l'espace interdigital dudit corps.

12. Raccord femelle (1) selon l'une des revendications 1 à 11,
**caractérisé en ce que** le corps tubulaire est en un matériau rigide tel qu'un polyamide, un polyester élastomère, un polypropylène copolymère.

13. Raccord femelle (1) selon l'une des revendications 1 à 12,
**caractérisé en ce que** le voile formé par le matériau élastiquement déformable dans la zone interdigitale du corps tubulaire confère auxdits doigts (5) du raccord (1) l'apparence de doigts palmés.
